(19) Europäisches Patentamt
European Patent Office
Office européen des brevets

(11) **EP 2 521 250 B1**

(12) **FASCICULE DE BREVET EUROPEEN**

(45) Date de publication et mention
de la délivrance du brevet:
**25.03.2020   Bulletin 2020/13**

(51) Int Cl.:
*H02K 23/18* *(2006.01)*          *H02P 25/02* *(2016.01)*
*F04B 35/04* *(2006.01)*          *H02K 33/18* *(2006.01)*

(21) Numéro de dépôt: **12164882.8**

(22) Date de dépôt: **20.04.2012**

(54) **Moteur de type électrodynamique linéaire, refroidisseur cryogénique comprenant un tel moteur et procédé mettant en oeuvre un tel moteur**

Motor vom elektrodynamischen linearen Typ, Kryogenkühler, der einen solchen Motor umfasst, und Verfahren zur Anwendung eines solchen Motors

Linear electrodynamic motor, cryogenic cooler comprising such a motor and method using such a motor

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.05.2011   FR 1153719**

(43) Date de publication de la demande:
**07.11.2012   Bulletin 2012/45**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• **Aigouy, Gérald M.**
**73110 La croix de la Rochette (FR)**
• **Debray, Benoît**
**38360 Sassenage (FR)**
• **Rey, Jean-Christophe**
**38690 Le grand Lemps (FR)**
• **Butterworth, James**
**38600 Fontaine (FR)**

(74) Mandataire: **De Cuenca, Emmanuel Jaime**
**L'Air Liquide S.A.**
**Direction Propriété Intellectuelle**
**75 Quai d'Orsay**
**75321 Paris Cedex 07 (FR)**

(56) Documents cités:
WO-A2-2008/016285      FR-A1- 2 909 493
JP-A- 2002 044 977      JP-A- 2010 048 150

• **TAE-WON CHUN ET AL: "A Novel Strategy of Efficiency Control for a Linear Compressor System Driven by a PWM Inverter", IEEE TRANSACTIONS ON INDUSTRIAL ELECTRONICS, IEEE SERVICE CENTER, PISCATAWAY, NJ, USA, vol. 54, no. 1, 1 janvier 2008 (2008-01-01), pages 296-301, XP011198766, ISSN: 0278-0046**

**Description**

La présente invention concerne un moteur de type électrodynamique linéaire, pour comprimer un fluide circulant dans un refroidisseur cryogénique notamment à cycle de Stirling. De plus, la présente invention concerne un refroidisseur cryogénique à cycle de Stirling comprenant un tel moteur. Par ailleurs, la présente invention concerne un procédé, pour comprimer un fluide circulant dans un tel refroidisseur cryogénique.

La présente invention trouve notamment application dans le domaine des machines cryogéniques à cycle alterné, machines Stirling ou tubes à gaz pulsé, mettant en œuvre des moteurs électrodynamiques linéaires à pistons, en particulier les machines cryogéniques destinées à être embarquées dans des engins spatiaux tels que les satellites d'observation de la Terre. Dans cette application, un moteur électrodynamique linéaire est utilisé comme compresseur pour comprimer un fluide tel que l'hélium, dont la détente réalise un refroidissement.

Un moteur électrodynamique linéaire de l'art antérieur comprend généralement deux bobines d'induction mobiles en translation, un circuit d'alimentation des bobines d'induction en courant alternatif et deux pistons liés respectivement aux deux bobines d'induction. Chaque piston est monté sur un palier qui développe une force de rappel élastique axiale proportionnelle au déplacement du piston. Sous l'effet des forces magnétiques cycliques, les bobines d'induction animent les pistons d'un mouvement linéaire alternatif. Les pistons forment des masses mobiles en translation, ce qui permet de comprimer le fluide.

Dans le but de maximiser l'amplitude du déplacement de chaque piston, donc la compression du fluide, le moteur est piloté de sorte que les pistons travaillent à ou près de leur fréquence de résonance mécanique. De plus, dans ce même but, le moteur est conçu pour réduire les forces d'amortissement des pistons, en particulier les frottements.

Cependant, cette réduction des forces d'amortissement rend le moteur sensible aux vibrations et aux chocs, lesquels peuvent provoquer des oscillations des pistons excessives produisant des chocs internes entre chaque piston et les parties fixes du moteur, ce qui diminue les performances et/ou la durée de vie du moteur. Or, dans le domaine des engins spatiaux, le lancement induit de nombreux chocs et vibrations.

Une solution consiste équiper le moteur de circuits secondaires reliant les bornes respectives des bobines d'induction de façon à les court-circuiter. Ainsi, lorsque des chocs ou vibrations déplacent les pistons, la variation de flux magnétique dans les bobines y induit, selon la loi de Lenz, une force contre-électromotrice, qui génère une force magnétique s'opposant au déplacement des pistons et amortissant leur déplacement.

Toutefois, la force magnétique générée est insuffisante pour amortir les vibrations importantes, notamment car elle est déterminée par le dimensionnement des bobines d'induction. En outre, l'inductance d'une bobine d'induction provoque un décalage de phase qui cause un retard dans la génération de la force magnétique amortissant les pistons, lesquels se déplacent donc quand même avec une amplitude excessive.

La présente invention vise notamment à résoudre, en tout ou partie, les problèmes mentionnés ci-avant.

A cet effet, l'invention a pour objet un moteur de type électrodynamique linéaire, pour comprimer un fluide circulant dans un refroidisseur cryogénique notamment à cycle de Stirling, le moteur comprenant :

- au moins un circuit d'alimentation adapté pour délivrer, un courant d'alimentation alternatif sous une tension d'alimentation alternative ;
- au moins une masse mobile, telle qu'un piston, suivant un mouvement de translation entre une première position et une deuxième position dans laquelle la masse mobile peut comprimer le fluide ; et
- au moins une bobine d'induction reliée au circuit d'alimentation et agencée de façon à imprimer le mouvement de translation à une masse mobile respective ;
- au moins un circuit secondaire agencé pour être relié aux bornes d'au moins une bobine d'induction ; et
- au moins un organe de commutation agencé de façon à relier sélectivement le circuit secondaire à au moins une bobine d'induction
- le circuit secondaire comportant au moins un composant de compensation adapté pour produire un décalage de phase entre ladite tension d'alimentation alternative et ledit courant d'alimentation alternatif, de façon à réduire le déphasage que l'inductance de la bobine d'induction produit entre ladite tension d'alimentation alternative et ledit courant d'alimentation alternatif

cf JP2010048150A considéré l'art antérieur le plus proche, cf également FR 2909493 A1 ou WO2008/016285 A2.

Le moteur se caractérise en ce que le ou chaque organe de commutation présente :

- une première position, dans laquelle le circuit secondaire respectif est relié à la bobine d'induction respective ; et
- une deuxième position, dans laquelle le circuit secondaire respectif est déconnecté de la bobine d'induction respective et,

le ou chaque organe de commutation est agencé de sorte que :

- dans la première position, le circuit d'alimentation respectif est déconnecté de la bobine d'induction respective ; et
- dans la deuxième position, le circuit d'alimentation respectif est relié à la bobine d'induction respective.

En d'autres termes, la bobine d'induction est temporairement alimentée au moyen d'un circuit secondaire comportant des composants qui compensent le décalage de phase provoqué par l'inductance de la bobine d'induction et donc qui limitent ou évitent le retard dans la génération de la force magnétique amortissant le ou chaque piston.

Ainsi, dans un moteur conforme à l'invention, l'amortissement du piston est rapide et optimal, ce qui permet d'augmenter les performances et/ou la durée de vie d'un tel moteur.

Dans la présente demande, les verbes « relier », « connecter » et leurs dérivés se rapportent à une liaison électrique réalisés par l'intermédiaire d'aucun, d'un seul ou de plusieurs composants électriques. Dans la présente demande, le verbe « lier » et ses dérivés se rapportent à une liaison mécanique.

Selon un mode de réalisation, au moins un composant de compensation est un composant électrique passif.

Ainsi, un tel composant de compensation permet de compenser le décalage de phase, de manière fiable et peu encombrante.

Selon un mode de réalisation, au moins un composant de compensation est sélectionné dans le groupe constitué d'un composant essentiellement résistif, un composant essentiellement inductif, un composant essentiellement capacitif, un transistor et un amplificateur opérationnel.

Ainsi, un tel composant de compensation permet de compenser efficacement le décalage de phase provoqué par l'inductance de la bobine d'induction.

Selon un mode de réalisation, au moins un circuit secondaire comporte deux composants de compensation.

Ainsi, un tel circuit secondaire permet de compenser efficacement le décalage de phase provoqué par l'inductance de la bobine d'induction.

Selon un mode de réalisation, au moins un circuit secondaire comporte un composant essentiellement résistif et un composant essentiellement capacitif, le composant essentiellement résistif et le composant essentiellement capacitif étant en reliés en série.

Ainsi, un tel circuit secondaire permet de compenser, avec une grande réactivité, le décalage de phase provoqué par l'inductance de la bobine d'induction.

Selon un mode de réalisation, au moins un circuit secondaire comporte un composant essentiellement résistif et un composant essentiellement capacitif, le composant essentiellement résistif et le composant essentiellement capacitif étant en reliés en parallèle.

Ainsi, un tel circuit secondaire permet de compenser, avec une grande réactivité, le décalage de phase provoqué par l'inductance de la bobine d'induction.

Ainsi, un tel organe de commutation peut être facilement actionné pour relier ou déconnecter le circuit secondaire à ou de la bobine d'induction respective.

Ainsi, un tel organe de commutation peut être facilement actionné pour relier ou déconnecter le circuit d'alimentation à ou de la bobine d'induction respective.

Selon un mode de réalisation, le moteur comprend en outre au moins un aimant de type permanent.

Ainsi, un tel aimant permanent permet d'induire un flux magnétique dans la bobine d'induction.

Selon un mode de réalisation, l'aimant respectif est fixe, et la bobine d'induction respective est mobile en translation par rapport à l'aimant respectif.

Ainsi, une telle construction permet de limiter les risques de détérioration de l'aimant fixe, lequel peut être relativement fragile.

Selon un mode de réalisation, la bobine d'induction respective est fixe, et l'aimant est mobile en translation par rapport à la bobine d'induction.

Ainsi, une telle construction réduit la masse entraînée, dans le cas où l'aimant est moins lourd que la bobine d'induction.

Dans un tel mode de réalisation, chaque aimant est porté par une masse mobile, par exemple par un piston.

Selon un mode de réalisation, le moteur comprend deux bobines d'induction, deux circuits d'alimentation et deux masses mobiles, les deux masses mobiles étant agencées de façon à se déplacer suivant des directions parallèles, de préférence suivant des directions colinéaires, et dans des sens respectifs opposés.

Ainsi, un tel moteur permet de maximiser la compression, car ses masses mobiles se déplacent en opposition de phase.

Par ailleurs, la présente invention a pour objet un refroidisseur cryogénique à cycle de Stirling, le refroidisseur cryogénique comprenant un compresseur pour comprimer un fluide et un détendeur pour détendre le fluide, le refroidisseur cryogénique étant caractérisé en ce que le compresseur comprend en outre au moins un moteur tel que précédemment exposé. Un tel refroidisseur présente une fiabilité élevée.

De plus, la présente invention a pour objet un procédé, pour comprimer un fluide circulant dans un refroidisseur cryogénique à cycle de Stirling, suivant la revendication 14.

La présente invention sera bien comprise et ses avantages ressortiront aussi à la lumière de la description qui va suivre, donnée uniquement à titre d'exemple non limitatif et faite en référence aux dessins annexés, dans lesquels :

- la figure 1 est une vue en coupe partielle d'un refroidisseur cryogénique qui est conforme à un premier mode de réalisation de l'invention et qui comprend un moteur conforme à un premier mode de réalisation de l'invention ; et
- la figure 2 est une vue similaire à la figure 1 d'un refroidisseur cryogénique qui est conforme à un deuxième mode de réalisation de l'invention et qui comprend un moteur conforme à un deuxième mode de réalisation de l'invention.

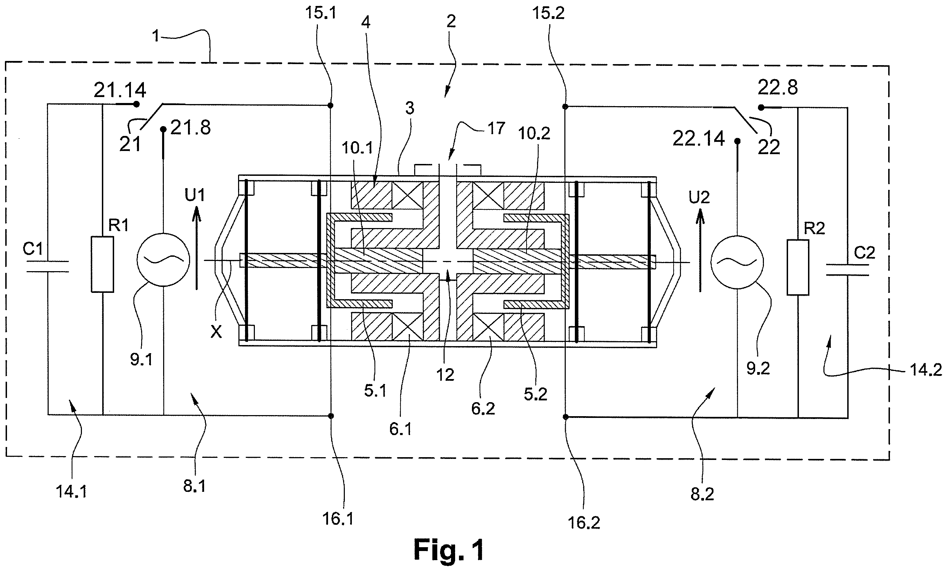

La figure 1 illustre un refroidisseur cryogénique 1 qui est du type à cycle de Stirling et qui peut être embarqué dans un engin spatial non représenté, tel qu'un satellite d'observation de la Terre.

Le refroidisseur cryogénique 1 comprend un compresseur 2, pour comprimer un fluide de refroidissement, et un détendeur non représenté, pour détendre le fluide. Le compresseur 2 comprend un carter 3 et un moteur 4 de type électrodynamique linéaire. Le moteur 4 est monté dans le carter 3.

Le moteur 4 a pour fonction de comprimer le fluide. Le moteur 4 comprend deux bobines d'induction 5.1 et 5.2, qui sont similaires dans l'exemple des figures. Chaque bobine d'induction 5.1 et 5.2 est formée d'un enroulement de spires ayant la forme générale d'un cylindre d'axe X.

Le moteur 4 comprend en outre deux aimants 6.1 et 6.2 de type permanent. Dans l'exemple des figures, les aimants 6.1 et 6.2 sont similaires. Chaque aimant 6.1 ou 6.2 a une forme globalement annulaire. Chaque aimant 6.1 ou 6.2 est fixe par rapport au carter 3. Chaque aimant 6.1 ou 6.2 est agencé pour induire un flux magnétique dans la bobine d'induction 5.1 ou 5.2 respective. Dans l'exemple des figures, les aimants 6.1 et 6.2 sont disposés radialement à l'extérieur des bobines 5.1 et 5.2.

Le moteur 4 comprend en outre deux circuits d'alimentation 8.1 et 8.2, auxquels sont reliées respectivement les bobines d'induction 5.1 et 5.2. Ainsi, les circuits d'alimentation 8.1 et 8.2 peuvent délivrer, respectivement vers les bobines d'induction 5.1 et 5.2, des courants d'alimentation I1 et I2 qui sont alternatifs et qui sont délivrés sous des tensions d'alimentation U1 et U2 également alternatives.

A cet effet, chaque circuit d'alimentation 8.1 ou 8.2 comprend un générateur respectif 9.1 ou 9.2 relié à des bornes 15.1, 16.1 ou 15.2, 16.2 des bobines d'induction 5.1 et 5.2.

Sous l'effet du courant d'alimentation I1 ou I2, chaque bobine d'induction 5.1 ou 5.2 est mobile en translation suivant l'axe X. Chaque bobine d'induction 5.1 ou 5.2 est mobile en translation par rapport au carter 3 et aux aimants 6.1 et 6.2.

Le moteur 4 comprend en outre deux pistons 10.1 et 10.2 qui sont similaires et qui sont solidaires respectivement des bobines d'induction 5.1 et 5.2 et en translation suivant l'axe X. Chaque piston 10.1 ou 10.2 forme une masse mobile qui est liée à une bobine d'induction respective 5.1 ou 5.2 de sorte que la bobine d'induction 5.1 ou 5.2 déplace le piston 10.1 ou 10.2 suivant un mouvement de translation ayant, dans l'exemple des figures, une trajectoire linéaire d'axe X. Chaque bobine d'induction 5.1 ou 5.2 est ainsi agencée de façon à imprimer un mouvement de translation à un piston respectif 10.1 ou 10.2.

Les parties statiques du moteur 4 définissent une chambre 12 dans laquelle se trouve du fluide à comprimer. Les pistons 10.1 et 10.2 sont mobiles entre une première position, visible à la figure 1, et une deuxième position dans laquelle les pistons 10.1 ou 10.2 peuvent comprimer le fluide dans la chambre 12.

Les pistons 10.1 et 10.2 sont agencés de façon à se déplacer suivant des directions colinéaires à l'axe X et dans des sens respectifs opposés. En d'autres termes, lorsqu'ils sont en mouvement, les pistons 10.1 et 10.2 se rapprochent ou s'éloignent l'un de l'autre. La figure 1 illustre leur deuxième position dans laquelle les pistons 10.1 et 10.2 sont au plus près l'un de l'autre et de la chambre 12.

Leur première position est celle dans laquelle les pistons 10.1 et 10.2 sont le plus éloigné l'un de l'autre. Dans cette première position, des organes de rappel élastique appartenant au moteur 4, tels que des membranes flexibles, exercent des efforts ramenant les pistons 10.1 et 10.2 vers leur deuxième position. Ces efforts sont proportionnels aux déplacements des pistons 5.1 et 5.2.

Le moteur 4 comprend en outre deux circuits secondaires 14.1 et 14.2 qui sont similaires et qui sont agencés pour être reliés respectivement aux bornes 15.1, 16.1 et 15.2, 16.2 des bobines d'induction 5.1 ou 5.2.

Le moteur 4 comprend deux organes de commutation ou commutateurs 21 et 22, respectivement agencés de façon à relier sélectivement chaque circuit secondaire 14.1 ou 14.2 à une bobine d'induction respective 5.1 ou 5.2. Chaque commutateur 21 ou 22 peut être formé d'un relais, d'un transistor à effet de champ à grille isolée plus couramment nommé MOSFET (acronyme anglais de l'expression « Métal Oxide Semiconductor Field Effect Transistor »), d'un composant actif etc.

Dans l'exemple des figures, chaque commutateur 21 ou 22 est bistable, si bien qu'il présente :

- une première position, représenté par la position 21.14 à la figure 1, dans laquelle le circuit secondaire respectif 14.1 ou 14.2 est relié à la bobine d'induction respective 5.1 ou 5.2 ; et

- une deuxième position, représenté par la position 21.8 à la figure 1, dans laquelle le circuit secondaire respectif 14.1 ou 14.2 est déconnecté de la bobine d'induction respective 5.1 ou 5.2.

Chaque commutateur 21 ou 22 est agencé de sorte que :

- dans la première position (21.14), le circuit d'alimentation respectif 8.1 ou 8.2 est déconnecté de la bobine d'induction respective 5.1 ou 5.2 ; cette première position (21.14) est mise en œuvre lorsque le moteur 4 est en fonctionnement, c'est-à-dire généralement lorsque le moteur 4 n'est pas soumis à des chocs ni à des vibrations transmis par l'engin spatial qui le supporte (phase stationnaire, en vol) ; et
- dans la deuxième position (21.8), le circuit d'alimentation respectif 8.1 ou 8.2 est relié à la bobine d'induction respective 5.1 ou 5.2 ; cette deuxième position (21.8) est mise en œuvre lorsque le moteur 4 est à l'arrêt ou en attente, c'est-à-dire généralement lorsque le moteur 4 est soumis à des chocs ou à des vibrations transmis par l'engin spatial qui le supporte (phase transitoire, au décollage).

Le circuit secondaire 14.1 comporte un composant résistif ou résistance R1 et un composant capacitif ou condensateur C1. Dans l'exemple de la figure 1, la résistance R1 et le condensateur C1 sont reliés en parallèle.

La résistance R1 et le condensateur C1 forment deux composants électriques passifs, qui sont dits « de compensation » car ils sont adaptés pour produire un décalage de phase entre la tension d'alimentation U1 et le courant d'alimentation I1, de façon à réduire le déphasage que l'inductance de la bobine d'induction 5.1 produit entre la tension d'alimentation U1 et le courant d'alimentation I1.

De même, le circuit secondaire 14.2 comporte un composant résistif ou résistance R2 et un composant capacitif ou condensateur C2. Dans l'exemple de la figure 1, la résistance R2 et le condensateur C2 sont reliés en parallèle.

La résistance R2 et le condensateur C2 forment deux composants électriques passifs, qui sont dits « de compensation » car ils sont adaptés pour produire un décalage de phase entre la tension d'alimentation U2 et le courant d'alimentation I2, de façon à réduire le déphasage que l'inductance de la bobine d'induction 5.2 produit entre la tension d'alimentation U2 et le courant d'alimentation I2.

De manière connue en soi, l'inductance de la bobine d'induction 5.1 produit un déphasage entre la tension d'alimentation U1 et le courant d'alimentation I1, la tension d'alimentation U1 étant en avance de phase sur le courant d'alimentation I1. De même, l'inductance de la bobine d'induction 5.2 produit un déphasage entre la tension d'alimentation U2 et le courant d'alimentation I2, la tension d'alimentation U2 étant en avance de phase sur le courant d'alimentation I2.

Dans la mesure où le circuit secondaire 14.1 est similaire au circuit secondaire 14.2, la description du circuit secondaire 14.1, donnée ci-après en relation avec la figure 1, peut être transposée au circuit secondaire 14.2.

Le circuit secondaire 14.1, avec la résistance R1 et le condensateur C1 en parallèle, produit un décalage de phase Delta.Phi.14.1 évalué en degrés comme suit :

$$\text{Delta.Phi.14.1 (degrés)} = -\arctan(2.\text{pi}.f.R1.C1)$$

avec :

- f fréquence de la source de vibration mécanique extérieure
- arctan : fonction arc tangente
- pi : nombre irrationnel environ égal à 3,141593...

La valeur de la résistance R1 et de la capacité du condensateur C1 sont déterminées de façon à compenser en tout ou partie le déphasage produit par l'inductance de la bobine d'induction 5.1 ou 5.2. Dans l'exemple des figures, la valeur de la résistance R1 et la capacité du condensateur C1 sont respectivement égales à 1 Ohm et 1 milliFarad (mF).

En service, le moteur 4 est mis en œuvre suivant un procédé conforme à l'invention pour comprimer un fluide circulant dans le refroidisseur cryogénique 1.

Chaque circuit d'alimentation 8.1 ou 8.2 alimente une bobine d'induction 5.1 ou 5.2, car chaque générateur 9.1 ou 9.2 délivre un courant d'alimentation I1 ou I2 sous une tension d'alimentation U1 ou U2.

Chaque bobine d'induction 5.1 ou 5.2 génère des forces magnétiques cycliques, qui animent chaque piston 10.1 ou 10.2 d'un mouvement linéaire alternatif, suivant l'axe X, et en sens opposés. Les pistons 10.1 et 10.2 compriment le fluide lorsqu'ils arrivent simultanément en deuxième position, c'est-à-dire au plus près de la chambre 12. Le fluide s'écoule alors vers un conduit 17 qui le mène hors du compresseur 2 et vers un détendeur non représenté.

Pour maximiser l'amplitude du déplacement de chaque piston 10.1 ou 10.2, donc pour maximiser la compression du fluide, le moteur 4 est piloté de sorte que les pistons 10.1 et 10.2 travaillent à ou près de leur fréquence de résonance mécanique.

Ainsi, dans un mode de service, on délivre le courant d'alimentation alternatif I1, I2 à chaque bobine d'induction 5.1, 5.2 de façon à imprimer un mouvement de translation à une masse mobile respective 10.1, 10.2 entre une première position et une deuxième position dans laquelle la masse mobile respective 10.1, 10.2 peut comprimer le fluide.

Lorsque survient un choc ou des vibrations, la variation de flux magnétique dans les bobines d'induction 5.1 et 5.2 y induit, selon la loi de Lenz, une force contre-électromotrice qui génère une force magnétique s'opposant au déplacement des pistons 10.1 et 10.2 et amortissant leur déplacement.

Comme précisé ci-avant, le circuit secondaire 14 compense le déphasage, si bien que la force magnétique est générée avec peu ou pas de retard sur les vibrations ou le choc survenu, en particulier à la fréquence de résonance des pistons.

Dans un mode d'amortissement, lorsqu'un choc et/ou une vibration est détecté(e), on réduit le déphasage que l'inductance de la bobine d'induction 5.1, 5.2 produit entre la tension d'alimentation alternative U1, U2 et le courant d'alimentation alternatif, de façon à générer une force magnétique adaptée pour amortir ou annuler un déplacement d'une masse mobile respective 10.1, 10.2 résultant du choc et/ou de la vibration.

Ainsi, le déplacement des pistons 10.1 et 10.2 est convenablement amorti.

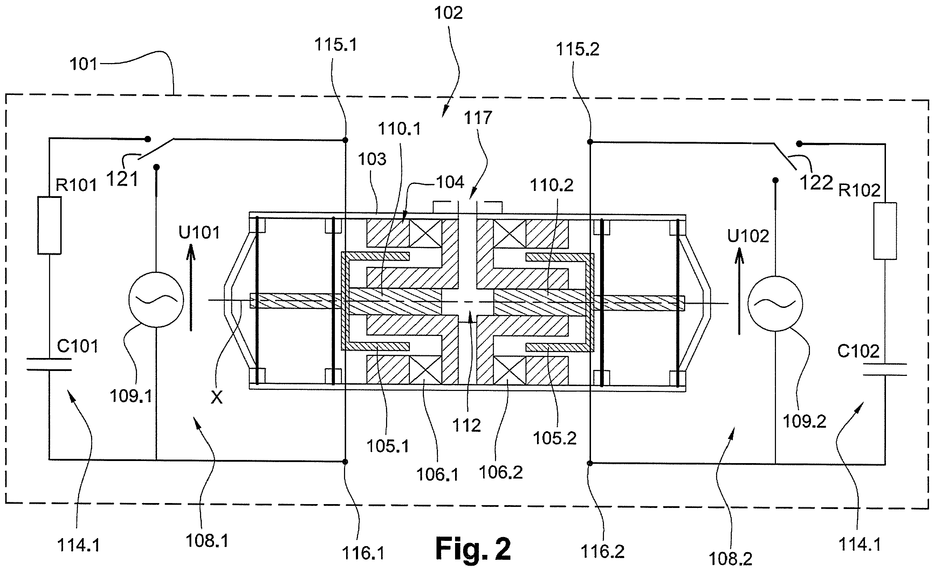

La figure 2 illustre un refroidisseur cryogénique 101 et un moteur 104 semblables au refroidisseur cryogénique 1 et au moteur 4. La description du refroidisseur cryogénique 1 et du moteur 4 donnée ci-avant en relation avec la figure 2 peut être transposée au refroidisseur cryogénique 101 et au moteur 104, à l'exception des différences énoncées ci-après.

Un élement du refroidisseur cryogénique 101 semblable ou correspondant à un élément du refroidisseur cryogénique 1 porte la même référence numérique augmentée de 100. On définit ainsi le refroidisseur cryogénique 101, un compresseur 102, un carter 103, le moteur 104, des bobines d'induction 105.1 et 105.2, des aimants 106.1 et 106.2, des circuits d'alimentation 108.1 et 108.2, des générateurs 9.1 et 9.2, des tensions d'alimentation U1 et U2 et des courants d'alimentation I1 et I2, des pistons 10.1 et 10.2, une chambre 112, des circuits secondaires 114.1 et 114.2, des bornes 115.1, 116.1 et 115.2, 116.2, des résistances R101 et R102 et des condensateurs C101 et C102, un conduit 117 et des commutateurs 121 et 122.

Le refroidisseur cryogénique 101 diffère du refroidisseur cryogénique 1, car la résistance R101 et le condensateur C101 sont reliés en série et car la résistance R102 et le condensateur C102 sont reliés en série.

Dans la mesure où le circuit secondaire 114.1 est similaire au circuit secondaire 114.2, la description du circuit secondaire 114.1, donnée ci-après en relation avec la figure 2, peut être transposée au circuit secondaire 114.2.

Le circuit secondaire 114.1, avec la résistance R101 et le condensateur C101 en série, produit un décalage de phase Delta.Phi.114.1 évalué en degrés comme suit :

$$\text{Delta.Phi.114.1 (degrés)} = -90 + \arctan(2.\text{pi}.f.R101.C101)$$

avec :

- f fréquence de la source de vibration mécanique extérieure
- arctan : fonction arc tangente
- pi : nombre irrationnel environ égal à 3,141593...

La valeur de la résistance R1 et de la capacité du condensateur C1 sont déterminées de façon à compenser en tout ou partie le déphasage produit par l'inductance de la bobine d'induction 105.1 ou 105.2. Dans l'exemple des figures, la valeur de la résistance R101 et la capacité du condensateur C101 sont respectivement égales à 1 Ohm et 1 milliFarad (mF).

Selon d'autres caractéristiques avantageuses mais facultatives, prises isolément ou selon toute combinaison techniquement admissible :

- Au moins un circuit secondaire comprend plus de deux composants de compensation, par exemple trois.

- Au moins un composant de compensation est sélectionné dans le groupe constitué d'un composant essentiellement inductif, un transistor et/ou un amplificateur opérationnel.

- Au lieu d'un commutateur, le moteur comprend deux commutateurs agencés pour commander chacun une branche respective du circuit d'alimentation, de façon à relier sélectivement le circuit secondaire à au moins une bobine d'induction.

- Au lieu de deux aimants respectifs fixes et deux bobines d'induction respectives mobiles, le moteur peut comprendre deux bobines d'induction respectives mobiles et deux aimants respectifs fixes. Dans une telle variante, chaque aimant est porté par une masse mobile, par exemple par un piston.

- Dans une variante comprenant un commutateur bistable, on peut prévoir, entre les deux positions de contact, une position neutre dans laquelle la bobine d'induction n'est reliée à aucun circuit.

**Revendications**

1. Moteur (4; 104) de type électrodynamique linéaire, pour comprimer un fluide circulant dans un refroidisseur cryogénique (1 ; 101) notamment à cycle de Stirling, le moteur (4 ; 104) comprenant :

   - au moins un circuit d'alimentation (8.1, 8.2 ; 108.1, 108.2) adapté pour délivrer, un courant d'alimentation alternatif (I1, I2 I101, I102) sous une tension d'alimentation alternative (U1, U2 ; U101, U102) ;
   - au moins une masse mobile (10.1, 10.2 ; 110.1, 110.2), telle qu'un piston, suivant un mouvement de translation entre une première position et une deuxième position dans laquelle la masse mobile respective (10.1, 10.2 ; 110.1, 110.2) peut comprimer le fluide ; et
   - au moins une bobine d'induction (5.1, 5.2 ; 105.1, 105.2) reliée au circuit d'alimentation (8.1, 8.2 ; 108.1, 108.2) et agencée de façon à imprimer le mouvement de translation à une masse mobile respective (10.1, 10.2 ; 110.1, 110.2) ;
   - au moins un circuit secondaire (14.1, 14.2 ; 114.1, 114.2) agencé pour être relié aux bornes (15.1, 15.2 ; 16.1, 16.2) d'au moins une bobine d'induction (5.1, 5.2 ; 105.1, 105.2) ; et
   - au moins un organe de commutation (21, 22 ; 121, 122) agencé de façon à relier sélectivement le circuit secondaire (14.1, 14.2 ; 114.1, 114.2) à au moins une bobine d'induction (5.1, 5.2 ; 105.1, 105.2) ;
   - le circuit secondaire (14.1, 14.2; 114.1, 114.2) comportant au moins un composant de compensation (R1, R2, C1, C2 ; R101, R102, C101, C102) adapté pour produire un décalage de phase entre ladite tension d'alimentation alternative et ledit courant d'alimentation alternatif (I1, I2 ; I101, I102), de façon à réduire le déphasage que l'inductance de la bobine d'induction (5.1, 5.2; 105.1, 105.2) produit entre ladite tension d'alimentation alternative (U1, U2 ; U101, U102) et ledit courant d'alimentation alternatif (I1, I2 ; I101, I102),

   le moteur (4 ; 104), étant **caractérisé en ce que**, le ou chaque organe de commutation (21, 22 ; 121, 122) présente :

   - une première position, dans laquelle le circuit secondaire respectif (14.1, 14.2; 114.1, 114.2) est relié à la bobine d'induction respective (5.1, 5.2 ; 105.1, 105.2) ; et
   - une deuxième position, dans laquelle le circuit secondaire respectif (14.1, 14.2 ; 114.1, 114.2) est déconnecté de la bobine d'induction respective (5.1, 5.2 ; 105.1, 105.2) ; et

   dans lequel le ou chaque organe de commutation (21, 22 ; 121, 122) est agencé de sorte que :

   - dans la première position, le circuit d'alimentation respectif (8.1, 8.2 ; 108.1, 108.2) est déconnecté de la bobine d'induction respective (5.1, 5.2 ; 105.1, 105.2) ; et
   - dans la deuxième position, le circuit d'alimentation respectif (8.1, 8.2 ; 108.1, 108.2) est relié à la bobine d'induction respective (5.1, 5.2 ; 105.1, 105.2).

2. Moteur (4 ; 104) selon la revendication 1, dans lequel au moins un composant de compensation (R1, R2, C1, C2 ; R101, R102, C101, C102) est un composant électrique passif.

3. Moteur (4 ; 104) selon l'une des revendications précédentes, dans lequel au moins un composant de compensation (R1, R2, C1, C2 ; R101, R102, C101, C102) est sélectionné dans le groupe constitué d'un composant essentiellement résistif, un composant essentiellement inductif, un composant essentiellement capacitif, un transistor et un amplificateur opérationnel.

4. Moteur (4 ; 104) selon l'une des revendications précédentes, dans lequel au moins un circuit secondaire (14.1, 14.2 ; 114.1, 114.2) comporte deux composants de compensation (R1, R2, C1, C2 ; R101, R102, C101, C102).

5. Moteur (4) selon les revendications 3 et 4, dans lequel au moins un circuit secondaire (14.1, 14.2) comporte un composant essentiellement résistif et un composant essentiellement capacitif, le composant essentiellement résistif et le composant essentiellement capacitif étant en reliés en série.

6. Moteur (104) selon les revendications 3 et 4, dans lequel au moins un circuit secondaire (114.1, 114.2) comporte un composant essentiellement résistif et un composant essentiellement capacitif, le composant essentiellement résistif et le composant essentiellement capacitif étant en reliés en parallèle.

7. Moteur (4 ; 104) selon l'une des revendications précédentes, comprenant en outre au moins un aimant (6.1, 6.2; 106.1, 106.2) de type permanent.

8. Moteur (4 ; 104) selon la revendication 7, dans lequel l'aimant respectif (6.1, 6.2 ; 106.1, 106.2) est fixe, et la bobine d'induction respective (5.1, 5.2 ; 105.1, 105.2) est mobile en translation par rapport à l'aimant respectif (6.1, 6.2 ; 106.1, 106.2).

9. Moteur (4 ; 104) selon la revendication 7, dans lequel la bobine d'induction respective (5.1, 5.2; 105.1, 105.2) est fixe, et l'aimant (6.1, 6.2; 106.1, 106.2) est mobile en translation par rapport à la bobine d'induction (5.1, 5.2 ; 105.1, 105.2).

10. Moteur (4 ; 104) selon l'une des revendications précédentes, comprenant deux bobines d'induction (5.1, 5.2; 105.1, 105.2), deux circuits d'alimentation (8.1, 8.2; 108.1, 108.2) et deux masses mobiles (10.1, 10.2; 110.1, 110.2), les deux masses mobiles (10.1, 10.2; 110.1, 110.2) étant agencées de façon à se déplacer suivant des directions parallèles (X), de préférence suivant des directions colinéaires, et dans des sens respectifs opposés.

11. Moteur selon l'une quelconque des revendications 1 à 10, **caractérisé en ce que** le circuit secondaire est distinct du circuit d'alimentation et est du type électrique passif, c'est-à-dire que le circuit secondaire ne comporte pas d'organe d'alimentation électrique du type actif tel qu'un générateur de courant.

12. Moteur selon l'une quelconque des revendications 1 à 11, **caractérisé en ce que** le circuit principal est du type électrique actif, c'est-à-dire qu'il contient un organe d'alimentation électrique du type actif tel qu'un générateur de courant.

13. Refroidisseur cryogénique (1; 101) à cycle de Stirling, le refroidisseur cryogénique (1; 101) comprenant un compresseur (2; 102) pour comprimer un fluide et un détendeur pour détendre le fluide, le refroidisseur cryogénique (1 ; 101) étant **caractérisé en ce que** le compresseur (2; 102) comprend au moins un moteur (4 ; 104) selon l'une des revendications précédentes.

14. Procédé, pour comprimer un fluide circulant dans un refroidisseur cryogénique (1 ; 101) à cycle de Stirling, le procédé mettant en œuvre un moteur (4 ; 104) de type électrodynamique linéaire, pour comprimer un fluide circulant dans un refroidisseur cryogénique (1 ; 101) notamment à cycle de Stirling, le moteur (4 ; 104) comprenant :

- au moins un circuit d'alimentation (8.1, 8.2 ; 108.1, 108.2) adapté pour délivrer, un courant d'alimentation alternatif (I1, I2 I101, I102) sous une tension d'alimentation alternative (U1, U2 ; U101, U102) ;
- au moins une masse mobile (10.1, 10.2 ; 110.1, 110.2), telle qu'un piston, suivant un mouvement de translation entre une première position et une deuxième position dans laquelle la masse mobile respective (10.1, 10.2 ; 110.1, 110.2) peut comprimer le fluide ; et
- au moins une bobine d'induction (5.1, 5.2 ; 105.1, 105.2) reliée au circuit d'alimentation (8.1, 8.2 ; 108.1, 108.2) et agencée de façon à imprimer le mouvement de translation à une masse mobile respective (10.1, 10.2 ; 110.1, 110.2) ;
- au moins un circuit secondaire (14.1, 14.2 ; 114.1, 114.2) agencé pour être relié aux bornes (15.1, 15.2 ; 16.1, 16.2) d'au moins une bobine d'induction (5.1, 5.2 ; 105.1, 105.2) ; et
- au moins un organe de commutation (21, 22 ; 121, 122) agencé de façon à relier sélectivement le circuit secondaire (14.1, 14.2 ; 114.1, 114.2) à au moins une bobine d'induction (5.1, 5.2 ; 105.1, 105.2) ;
- le circuit secondaire (14.1, 14.2; 114.1, 114.2) comportant au moins un composant de compensation (R1, R2, C1, C2 ; R101, R102, C101, C102) adapté pour produire un décalage de phase entre ladite tension d'alimentation alternative et ledit courant d'alimentation alternatif (I1, I2 ; I101, I102), de façon à réduire le déphasage que l'inductance de la bobine d'induction (5.1, 5.2; 105.1, 105.2) produit entre ladite tension d'alimentation alternative (U1, U2 ; U101, U102) et ledit courant d'alimentation alternatif (I1, I2; I101, I102)

**caractérisé en ce que** le ou chaque organe de commutation présente :

- une première position, dans laquelle le circuit secondaire respectif (14.1, 14.2; 114.1, 114.2) est relié à la bobine d'induction respective (5.1, 5.2 ; 105.1, 105.2) ; et
- une deuxième position, dans laquelle le circuit secondaire respectif (14.1, 14.2 ; 114.1, 114.2) est déconnecté de la bobine d'induction respective (5.1, 5.2 ; 105.1, 105.2) ; et

dans lequel le ou chaque organe de commutation (21, 22 ; 121, 122) est agencé de sorte que :

- dans la première position, le circuit d'alimentation respectif (8.1, 8.2 ; 108.1, 108.2) est déconnecté de la bobine d'induction respective (5.1, 5.2 ; 105.1, 105.2) ; et
- dans la deuxième position, le circuit d'alimentation respectif (8.1, 8.2 ; 108.1, 108.2) est relié à la bobine d'induction respective (5.1, 5.2 ; 105.1, 105.2),

et **en ce que** le procédé comprenant:

- dans un mode de service, l'étape de délivrer un courant d'alimentation alternatif (I1, I2 ; I101, I102) à au moins une bobine d'induction respective (5.1, 5.2 ; 105.1, 105.2) de façon à imprimer un mouvement de translation à une masse mobile respective (10.1, 10.2 ; 110.1, 110.2) entre une première position et une deuxième position dans laquelle la masse mobile respective (10.1, 10.2; 110.1, 110.2) peut comprimer le fluide.

15. Procédé selon la revendication 14 **caractérisé en ce que** le procédé comprend dans un mode d'amortissement, lorsqu'un choc et/ou une vibration est détecté(e), l'étape de réduire le déphasage que l'inductance de la bobine d'induction (5.1, 5.2; 105.1, 105.2) produit entre la tension d'alimentation alternative (U1, U2 ; U101, U102) et le courant d'alimentation alternatif, de façon à générer une force magnétique adaptée pour amortir ou annuler un déplacement d'une masse mobile respective (10.1, 10.2 ; 110.1, 110.2) résultant dudit choc et/ou de ladite vibration.

**Patentansprüche**

1. Motor (4; 104) vom linearen elektrodynamischen Typ, zum Komprimieren eines in einem Kryogenkühler (1; 101) insbesondere mit Stirlingzyklus zirkulierenden Fluids, wobei der Motor (4; 104) umfasst:

- mindestens einen Versorgungskreis (8.1, 8.2; 108.1, 108.2), der geeignet ist, einen Versorgungswechselstrom (I1, I2; I101, I102) unter einer Versorgungswechselspannung (U1, U2; U101, U102) zu liefern;
- mindestens eine bewegliche Masse (10.1, 10.2; 110.1, 110.2), wie einen Kolben, einer Translationsbewegung zwischen einer ersten Position und einer zweiten Position folgend, in der die jeweilige bewegliche Masse (10.1, 10.2; 110.1, 110.2) das Fluid komprimieren kann; und
- mindestens eine Induktionsspule (5.1, 5.2; 105.1, 105.2), die mit dem Versorgungskreis (8.1, 8.2; 108.1, 108.2) verbunden und so angeordnet ist, dass sie die Translationsbewegung auf eine jeweilige bewegliche Masse (10.1, 10.2; 110.1; 110.2) überträgt;
- mindestens einen Sekundärkreis (14.1, 14.2; 114.1, 114.2), der angeordnet ist, um mit den Anschlüssen (15.1, 15.2, 16.1, 16.2) mindestens einer Induktionsspule (5.1, 5.2; 105.1, 105.2) verbunden zu werden; und
- mindestens ein Schaltorgan (21, 22; 121, 122), das so angeordnet ist, dass es den Sekundärkreis (14.1, 14.2; 114.1, 114.2) selektiv mit mindestens einer Induktionsspule (5.1, 5.2; 105.1, 105.2) verbindet;
- den Sekundärkreis (14.1, 14.2; 114.1, 114.2), der mindestens einen Kompensationsbestandteil (R1, R2, C1, C2; R101, R102, C101, C102) umfasst, der geeignet ist, einen Phasenversatz zwischen der Versorgungswechselspannung und dem Versorgungswechselstrom (I1, I2; I101, I102) zu erzeugen, um die Phasenverschiebung, die die Induktivität der Induktionsspule (5.1, 5.2; 105.1, 105.2) zwischen der Versorgungswechselspannung (U1, U2; U101, U102) und dem Versorgungswechselstrom (I1, I2; I101, I102) erzeugt, zu verringern,

wobei der Motor (4; 104) **dadurch gekennzeichnet ist, dass** das oder jedes Schaltorgan (21, 22; 121, 122) aufweist:

- eine erste Position, in der der jeweilige Sekundärkreis (14.1, 14.2; 114.1, 114.2) mit der jeweiligen Induktionsspule (5.1, 5.2; 105.1, 105.2) verbunden ist; und
- eine zweite Position, in der der jeweilige Sekundärkreis (14.1, 14.2; 114.1, 114.2) von der jeweiligen Induktionsspule (5.1, 5.2; 105.1, 105.2) getrennt ist; und

wobei das oder jedes Schaltorgan (21, 22; 121, 122) derart angeordnet ist, dass:

- in der ersten Position der jeweilige Versorgungskreis (8.1, 8.2; 108.1, 108.2) von der jeweiligen Induktionsspule (5.1, 5.2; 105.1, 105.2) getrennt ist; und
- in der zweiten Position der jeweilige Versorgungskreis (8.1, 8.2; 108.1, 108.2) mit der jeweiligen Induktionsspule (5.1, 5.2; 105.1, 105.2) verbunden ist.

2. Motor (4; 104) nach Anspruch 1, wobei mindestens ein Kompensationsbestandteil (R1, R2, C1, C2; R101, R102, C101, C102) ein passiver elektrischer Bestandteil ist.

3. Motor (4; 104) nach einem der vorstehenden Ansprüche, wobei mindestens ein Kompensationsbestandteil (R1, R2, C1, C2; R101, R102, C101, C102) ausgewählt ist aus der Gruppe, die aus einem im Wesentlichen resistiven Bestandteil, einem im Wesentlichen induktiven Bestandteil, einem im Wesentlichen kapazitiven Bestandteil, einem Transistor und einem Operationsverstärker besteht.

4. Motor (4; 104) nach einem der vorstehenden Ansprüche, wobei mindestens ein Sekundärkreis (14.1, 14.2; 114.1, 114.2) zwei Kompensationsbestandteile (R1, R2, C1, C2; R101, R102, C101, C102) umfasst.

5. Motor (4) nach den Ansprüchen 3 und 4, wobei mindestens ein Sekundärkreis (14.1, 14.2) einen im Wesentlichen resistiven Bestandteil und einen im Wesentlichen kapazitiven Bestandteil umfasst, wobei der im Wesentlichen resistive Bestandteil und der im Wesentlichen kapazitive Bestandteil in Reihe geschaltet sind.

6. Motor (104) nach den Ansprüchen 3 und 4, wobei mindestens ein Sekundärkreis (114.1, 114.2) einen im Wesentlichen resistiven Bestandteil und einen im Wesentlichen kapazitiven Bestandteil umfasst, wobei der im Wesentlichen resistive Bestandteil und der im Wesentlichen kapazitive Bestandteil parallel geschaltet sind.

7. Motor (4; 104) nach einem der vorstehenden Ansprüche, weiter mindestens einen Magneten (6.1, 6.2; 106.1, 106.2) vom Permanenttyp umfassend.

8. Motor (4; 104) nach Anspruch 7, wobei der jeweilige Magnet (6.1, 6.2; 106.1, 106.2) feststehend ist und die jeweilige Induktionsspule (5.1, 5.2; 105.1, 105.2) in Bezug auf den jeweiligen Magneten (6.1, 6.2; 106.1, 106.2) translatorisch beweglich ist.

9. Motor (4; 104) nach Anspruch 7, wobei die jeweilige Induktionsspule (5.1, 5.2; 105.1, 105.2) feststehend ist und der Magnet (6.1, 6.2; 106.1, 106.2) in Bezug auf die Induktionsspule (5.1, 5.2; 105.1, 105.2) translatorisch beweglich ist.

10. Motor (4; 104) nach einem der vorstehenden Ansprüche, umfassend zwei Induktionsspulen (5.1, 5.2; 105.1, 105.2), zwei Versorgungskreise (8.1, 8.2; 108.1, 108.2) und zwei bewegliche Massen (10.1, 10.2; 110.1, 110.2), wobei die zwei beweglichen Massen (10.1, 10.2; 110.1, 110.2) so angeordnet sind, dass sie sich in parallelen Richtungen (X), vorzugsweise in kollinearen Richtungen, und in jeweils entgegengesetzten Richtungen bewegen.

11. Motor nach einem der Ansprüche 1 bis 10, **dadurch gekennzeichnet, dass** der Sekundärkreis vom Versorgungskreis verschieden ist und vom passiven elektrischen Typ ist, das heißt, dass der Sekundärkreis kein elektrisches Versorgungsorgan vom aktiven Typ wie einen Stromgenerator umfasst.

12. Motor nach einem der Ansprüche 1 bis 11, **dadurch gekennzeichnet, dass** der Hauptkreis vom aktiven elektrischen Typ ist, das heißt, dass er ein elektrisches Versorgungsorgan vom aktiven Typ wie einen Stromgenerator enthält.

13. Kryogenkühler (1; 101) mit Stirlingzyklus, wobei der Kryogenkühler (1; 101) einen Kompressor (2; 102) zum Komprimieren eines Fluids und einen Druckminderer zum Entspannen des Fluids umfasst, wobei der Kryogenkühler (1; 101) **dadurch gekennzeichnet ist, dass** der Kompressor (2; 102) mindestens einen Motor (4; 104) nach einem der vorstehenden Ansprüche umfasst.

14. Verfahren zum Komprimieren eines in einem Kryogenkühler (1; 101) mit Stirlingzyklus zirkulierenden Fluids, wobei das Verfahren einen Motor (4; 104) vom linearen elektrodynamischen Typ einsetzt, um ein in einem Kryogenkühler (1; 101) insbesondere mit Stirlingzyklus zirkulierendes Fluid zu komprimieren, wobei der Motor (4; 104) umfasst:

- mindestens einen Versorgungskreis (8.1, 8.2; 108.1, 108.2), der geeignet ist, einen Versorgungswechselstrom (I1, I2; I101, I102) unter einer Versorgungswechselspannung (U1, U2; U101, U102) zu liefern;
- mindestens eine bewegliche Masse (10.1, 10.2; 110.1, 110.2), wie einen Kolben, einer Translationsbewegung zwischen einer ersten Position und einer zweiten Position folgend, in der die jeweilige bewegliche Masse (10.1, 10.2; 110.1, 110.2) das Fluid komprimieren kann; und

- mindestens eine Induktionsspule (5.1, 5.2; 105.1, 105.2), die mit dem Versorgungskreis (8.1, 8.2; 108.1, 108.2) verbunden und so angeordnet ist, dass sie die Translationsbewegung auf eine jeweilige bewegliche Masse (10.1, 10.2; 110.1, 110.2) überträgt;

- mindestens einen Sekundärkreis (14.1, 14.2; 114.1, 114.2), der angeordnet ist, um mit den Anschlüssen (15.1, 15.2; 16.1, 16.2) mindestens einer Induktionsspule (5.1, 5.2; 105.1, 105.2) verbunden zu werden; und

- mindestens ein Schaltorgan (21, 22; 121, 122), das so angeordnet ist, dass es den Sekundärkreis (14.1, 14.2; 114.1, 114.2) selektiv mit mindestens einer Induktionsspule (5.1, 5.2; 105.1, 105.2) verbindet;

- den Sekundärkreis (14.1, 14.2; 114.1, 114.2), der mindestens einen Kompensationsbestandteil (R1, R2, C1, C2; R101, R102, C101, C102) umfasst, der geeignet ist, einen Phasenversatz zwischen der Versorgungswechselspannung und dem Versorgungswechselstrom (I1, I2; I101, I102) zu erzeugen, um die Phasenverschiebung, die die Induktivität der Induktionsspule (5.1, 5.2; 105.1, 105.2) zwischen der Versorgungswechselspannung (U1, U2; U101, U102) und dem Versorgungswechselstrom (I1, I2; I101, I102) erzeugt, zu verringern,

**dadurch gekennzeichnet, dass** das oder jedes Schaltorgan aufweist:

- eine erste Position, in der der jeweilige Sekundärkreis (14.1, 14.2; 114.1, 114.2) mit der jeweiligen Induktionsspule (5.1, 5.2; 105.1, 105.2) verbunden ist; und

- eine zweite Position, in der der jeweilige Sekundärkreis (14.1, 14.2; 114.1, 114.2) von der jeweiligen Induktionsspule (5.1, 5.2; 105.1, 105.2) getrennt ist; und

wobei das oder jedes Schaltorgan (21, 22; 121, 122) derart angeordnet ist, dass:

- in der ersten Position der jeweilige Versorgungskreis (8.1, 8.2; 108.1, 108.2) von der jeweiligen Induktionsspule (5.1, 5.2; 105.1, 105.2) getrennt ist; und

- in der zweiten Position der jeweilige Versorgungskreis (8.1, 8.2; 108.1, 108.2) mit der jeweiligen Induktionsspule (5.1, 5.2; 105.1, 105.2) verbunden ist,

und dadurch, dass das Verfahren umfasst:

- in einem Betriebsmodus den Schritt des Lieferns eines Versorgungswechselstrom (I1, I2; I101, I102) zu mindestens einer jeweiligen Induktionsspule (5.1, 5.2; 105.1, 105.2), um eine Translationsbewegung auf eine jeweilige bewegliche Masse (10.1, 10.2; 110.1, 110.2) zwischen einer ersten Position und einer zweiten Position zu übertragen, in der die jeweilige bewegliche Masse (10.1, 10.2; 110.1, 110.2) das Fluid komprimieren kann.

15. Verfahren nach Anspruch 14, **dadurch gekennzeichnet, dass** das Verfahren in einem Dämpfungsmodus, wenn ein Stoß und/oder eine Vibration erfasst wird, den Schritt des Verringerns der Phasenverschiebung, die die Induktivität der Induktionsspule (5.1, 5.2; 105.1, 105.2) zwischen der Versorgungswechselspannung (U1, U2; U101, U102) und dem Versorgungswechselstrom erzeugt, umfasst, um eine Magnetkraft zu erzeugen, die geeignet ist, eine Verschiebung einer jeweiligen beweglichen Masse (10.1, 10.2; 110.1, 110.2), die sich aus dem Stoß und/oder der Vibration ergibt, zu dämpfen oder aufzuheben.

**Claims**

1. Motor (4; 104) of the linear electrodynamic type, for compressing a fluid circulating in a cryogenic cooler (1; 101) in particular of the Stirling cycle type, the motor (4; 104) comprising:

- at least one power supply circuit (8.1, 8.2; 108.1, 108.2) suitable for delivering, an AC power supply current (I1, 12; 1101, 1102) with an AC power supply voltage (U1, U2; U101, U102);

- at least one movable mass (10.1, 10.2; 110.1, 110.2), such as a piston, following a translation movement between a first position and a second position wherein the respective movable mass (10.1, 10.2; 110.1, 110.2) can compress the fluid; and

- at least one induction coil (5.1, 5.2; 105.1, 105.2) connected to the power supply circuit (8.1, 8.2; 108.1, 108.2) and arranged so as to impress the translation movement on a respective movable mass (10.1, 10.2; 110.1, 110.2);

- at least one secondary circuit (14.1, 14.2; 114.1, 114.2) arranged to be connected to the terminals (15.1, 15.2; 16.1, 16.2) of at least one induction coil (5.1, 5.2; 105.1, 105.2); and

- at least one switching member (21, 22; 121, 122) arranged so as to selectively connect the secondary circuit (14.1, 14.2; 114.1, 114.2) to at least one induction coil (5.1, 5.2; 105.1, 105.2);
- the secondary circuit (14.1, 14.2; 114.1, 114.2) comprising at least one compensation component (R1, R2, C1, C2; R101, R102, C101, C102) suitable for producing a phase shift between said AC power supply voltage and said AC power supply current (I1, I2; 1101, 1102), so as to reduce the shift that the inductance of the induction coil (5.1, 5.2; 105.1, 105.2) produces between said AC power supply voltage (U1, U2; U101, U102) and said AC power supply current (I1, I2; 1101, 1102),

the motor (4; 104), being **characterised in that**, the or each switching member (21, 22; 121, 122) has:

- a first position, wherein the respective secondary circuit (14.1, 14.2; 114.1, 114.2) is connected to the respective induction coil (5.1, 5.2; 105.1, 105.2); and
- a second position, wherein the respective secondary circuit (14.1, 14.2; 114.1, 114.2) is disconnected from the respective induction coil (5.1, 5.2; 105.1, 105.2); and

wherein the or each switching member (21, 22; 121, 122) is arranged such that:

- in the first position, the respective power supply circuit (8.1, 8.2; 108.1, 108.2) is disconnected from the respective induction coil (5.1, 5.2; 105.1, 105.2); and
- in the second position, the respective power supply circuit (8.1, 8.2; 108.1, 108.2) is connected to the respective induction coil (5.1, 5.2; 105.1, 105.2).

2. Motor (4; 104) according to claim 1, wherein at least one compensation component (R1, R2, C1, C2; R101, R102, C101, C102) is a passive electrical component.

3. Motor (4; 104) according to one of the preceding claims, wherein at least one compensation component (R1, R2, C1, C2; R101, R102, C101, C102) is selected from the group comprising a substantially resistive component, a substantially inductive component, a substantially capacitive component, a transistor and an operational amplifier.

4. Motor (4; 104) according to one of the preceding claims, wherein at least one secondary circuit (14.1, 14.2; 114.1, 114.2) comprises two compensation components (R1, R2, C1, C2; R101, R102, C101, C102).

5. Motor (4) according to claims 3 and 4, wherein at least one secondary circuit (14.1, 14.2) comprises a substantially resistive component and a substantially capacitive component, the substantially resistive component and the substantially capacitive component being connected in series.

6. Motor (104) according to claims 3 and 4, wherein at least one secondary circuit (114.1, 114.2) comprises a substantially resistive component and a substantially capacitive component, the substantially resistive component and the substantially capacitive component being connected in parallel.

7. Motor (4; 104) according to one of the preceding claims, further comprising at least one magnet (6.1, 6.2; 106.1, 106.2) of the permanent type.

8. Motor (4; 104) according to claim 7, wherein the respective magnet (6.1, 6.2; 106.1, 106.2) is fixed, and the respective induction coil (5.1, 5.2; 105.1, 105.2) is movable in translation with respect to the respective magnet (6.1, 6.2; 106.1, 106.2).

9. Motor (4; 104) according to claim 7, wherein the respective induction coil (5.1, 5.2; 105.1, 105.2) is fixed, and the magnet (6.1, 6.2; 106.1, 106.2) is movable in translation with respect to the induction coil (5.1, 5.2; 105.1, 105.2).

10. Motor (4; 104) according to one of the preceding claims, comprising two induction coils (5.1, 5.2; 105.1, 105.2), two power supply circuits (8.1, 8.2; 108.1, 108.2) and two movable masses (10.1, 10.2; 110.1, 110.2), the two movable masses (10.1, 10.2; 110.1, 110.2) being arranged so as to be moved along parallel directions (X), preferably along colinear directions, and in opposite respective directions.

11. Motor according to any one of claims 1 to 10, **characterised in that** the secondary circuit is separate from the power supply circuit and is of the passive electric type, i.e. the secondary circuit does not comprise an electrical power supply member of the active type such as a current generator.

**12.** Motor according to any one of claims 1 to 11, **characterised in that** the main circuit is of the active electrical type, i.e. it contains an electrical power supply member of the active type such as a current generator.

**13.** Cryogenic cooler (1; 101) of the Stirling cycle type, with the cryogenic cooler (1; 101) comprising a compressor (2; 102) for compressing a fluid and an expander for expanding the fluid, with the cryogenic cooler (1; 101) being **characterised in that** the compressor (2; 102) comprises at least one motor (4; 104) according to one of the preceding claims.

**14.** Method, for compressing a fluid circulating in a cryogenic cooler (1; 101) of the Stirling cycle type, with the method implementing a motor (4; 104) of the linear electrodynamic type, for compressing a fluid circulating in a cryogenic cooler (1; 101) in particular of the Stirling cycle type, the motor (4; 104) comprising:

- at least one power supply circuit (8.1, 8.2; 108.1, 108.2) suitable for delivering, an AC power supply current (I1, 12; 1101, 1102) with an AC power supply voltage (U1, U2; U101, U102);
- at least one movable mass (10.1, 10.2; 110.1, 110.2), such as a piston, following a translation movement between a first position and a second position wherein the respective movable mass (10.1, 10.2; 110.1, 110.2) can compress the fluid; and
- at least one induction coil (5.1, 5.2; 105.1, 105.2) connected to the power supply circuit (8.1, 8.2; 108.1, 108.2) and arranged so as to impress the translation movement on a respective movable mass (10.1, 10.2; 110.1, 110.2);
- at least one secondary circuit (14.1, 14.2; 114.1, 114.2) arranged to be connected to the terminals (15.1, 15.2; 16.1, 16.2) of at least one induction coil (5.1, 5.2; 105.1, 105.2); and
- at least one switching member (21, 22; 121, 122) arranged so as to selectively connect the secondary circuit (14.1, 14.2; 114.1, 114.2) to at least one induction coil (5.1, 5.2; 105.1, 105.2);
- the secondary circuit (14.1, 14.2; 114.1, 114.2) comprising at least one compensation component (R1, R2, C1, C2; R101, R102, C101, C102) suitable for producing a phase shift between said AC power supply voltage and said AC power supply current (I1, I2; 1101, 1102), so as to reduce the shift that the inductance of the induction coil (5.1, 5.2; 105.1, 105.2) produces between said AC power supply voltage (U1, U2; U101, U102) and said AC power supply current (I1, 12; 1101, 1102)

**characterised in that** the or each switching member has:

- a first position, wherein the respective secondary circuit (14.1, 14.2; 114.1, 114.2) is connected to the respective induction coil (5.1, 5.2; 105.1, 105.2); and
- a second position, wherein the respective secondary circuit (14.1, 14.2; 114.1, 114.2) is disconnected from the respective induction coil (5.1, 5.2; 105.1, 105.2); and

wherein the or each switching member (21, 22; 121, 122) is arranged such that:

- in the first position, the respective power supply circuit (8.1, 8.2; 108.1, 108.2) is disconnected from the respective induction coil (5.1, 5.2; 105.1, 105.2); and
- in the second position, the respective power supply circuit (8.1, 8.2; 108.1, 108.2) is connected to the respective induction coil (5.1, 5.2; 105.1, 105.2),

and **in that** the method comprises:

- in a service mode, the step of delivering an AC power supply current (I1, I2; 1101, 1102) to at least one induction coil respective (5.1, 5.2; 105.1, 105.2) so as to impress a translation movement on a respective movable mass (10.1, 10.2; 110.1, 110.2) between a first position and a second position wherein the respective movable mass (10.1, 10.2; 110.1, 110.2) can compress the fluid.

**15.** Method according to claim 14, **characterised in that** the method comprises in a damping mode, when an impact and/or a vibration is detected, the step of reducing the phase shift that the inductance of the induction coil (5.1, 5.2; 105.1, 105.2) produces between the AC power supply voltage (U1, U2; U101, U102) and the AC power supply current, so as to generate a magnetic force suitable for damping or cancelling a movement of a respective movable mass (10.1, 10.2; 110.1, 110.2) resulting from said impact and/or from said vibration.

**Fig. 1**

EP 2 521 250 B1

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2010048150 A
- FR 2909493 A1

- WO 2008016285 A2